# EUROPÄISCHE PATENTSCHRIFT

(11) **EP 3 870 512 B1**
(45) Veröffentlichungstag und Bekanntmachung des Hinweises auf die Patenterteilung: **06.12.2023**
(21) Anmeldenummer: 19794963.9
(22) Anmeldetag: 23.10.2019
(51) Int. Cl.: B65G 47/08, B65B 5/06, B65B 5/10, B65B 35/54, B65G 47/57

(54) **VERFAHREN UND VORRICHTUNG ZUM BEFÜLLEN EINES BEHÄLTERS MIT PRODUKTEN**
METHOD AND DEVICE FOR FILLING A CONTAINER WITH PRODUCTS
PROCÉDÉ ET DISPOSITIF POUR REMPLIR UN CONTENANT AVEC DES PRODUITS

(30) Priorität: 26.10.2018 DE 102018008476
(43) Veröffentlichungstag der Anmeldung: 01.09.2021
(73) Patentinhaber: Focke & Co. (GmbH & Co. KG), 27283 Verden (DE)
(72) Erfinder: SCHMIDT, Dennis, 26810 Westoverledingen (DE); PRAHM, Andreas, 26676 Barßel (DE); NEUFELD, Andreas, 26842 Ostrhauderfehn / OT Idafehn (DE); SACHS, Frank, 26683 Saterland (DE)
(74) Vertreter: Aulich, Martin
(86) Internationale Anmeldenummer: PCT/EP2019/078938
(87) Internationale Veröffentlichungsnummer: WO 2020/084011

(56) Entgegenhaltungen:
- DE-A1-102016 014 333
- JP-A- H08 143 111
- US-A- 4 862 677
- US-A- 5 002 449

## Beschreibung

Die Erfindung betrifft ein Verfahren zum Befüllen von Behältern, insbesondere Kartons, mit Produkten, wie etwa Packungen, bei dem die Produkte nacheinander horizontal einer Befülleinrichtung zugefördert werden, in der die Produkte unter Zusammenfassung zu einzelnen Produktgruppen nachfolgend gruppiert werden und jeweils ein bereitgehaltener Behälter, der der Befülleinrichtung insbesondere horizontal zugefördert wird, mit ein oder mehreren Produktgruppen einbahnig befüllt wird, wobei die befüllten Behälter im Anschluss insbesondere horizontal abtransportiert werden. Die Erfindung betrifft des Weiteren eine entsprechende Vorrichtung zur Befüllung solcher Behälter mit den Merkmalen des Oberbegriffs des Anspruchs 13.

Es ist eine Vielzahl derartiger Verfahren und Vorrichtungen bekannt. Unter anderem aus der DE 10 2016 014 333 A1. Die in dieser Druckschrift offenbarte Zuführung der einzelnen Produkte zu der Befülleinrichtung mittels Zuförderer, das Gruppieren der Produkte, die Zuführung der Behälter zu der Befülleinrichtung sowie das Abfördern der befüllten Behälter von der Befülleinrichtung mittels Abförderer erfolgt vornehmlich in horizontalen Ebenen, was Platzbedarf erfordert. Um diesen Platzbedarf zu begrenzen, ist in der DE 10 2016 014 333 A1 unter anderem vorgesehen, die befüllten Behälter in einer vertikalen Ebene von oben nach unten in Richtung des Abförderers zu bewegen.

Der Aufbau der DE 10 2016 014 333 A1 hat allerdings mit Blick auf die erreichbare Befüllleistung Grenzen, die - wie die Anmelderin festgestellt hat - unter anderem durch die dort gezeigte einbahnige Zuförderung der einzelnen Produkte zu der Befülleinrichtung bedingt sind.

Ausgehend hiervon ist es Aufgabe der vorliegenden Erfindung, das Verfahren und die Vorrichtung der eingangs genannten Art weiterzuentwickeln.

Diese Aufgabe wird gelöst durch ein Verfahren mit den Merkmalen des Anspruchs 1 und eine Vorrichtung mit den Merkmalen des Anspruchs 13.

Entsprechend ist das erfindungsgemäße Verfahren durch folgende Maßnahmen gekennzeichnet:
a) die Produkte, wie etwa Beutel (gefüllt bspw. mit Chips, Tabak oder anderen Füllprodukten), werden der Befülleinrichtung mehrbahnig zugefördert, nämlich entlang von mehreren übereinander angeordneten Förderbahnen,
b) die der Befülleinrichtung entlang der Förderbahnen zugeförderten Produkte werden von der Befülleinrichtung mehrbahnig zu Produktgruppen gruppiert, insbesondere von den Förderbahnen jeweils zugeordneten, insbesondere in einer gemeinsamen (vertikalen) Ebene übereinander angeordneten Gruppierförderern der Befülleinrichtung, bevorzugt von entsprechend übereinander angeordneten Fächerförderern,
c) die Produktgruppen werden nachfolgend mehrbahnig nacheinander entlang von übereinander angeordneten Zuführbahnen einem gemeinsamen umlaufenden Vertikalförderer der Befülleinrichtung mit mehreren insbesondere in einer gemeinsamen (vertikalen) Ebene übereinander angeordneten (insbesondere äquidistant voneinander beabstandeten) Aufnahmen für jeweils (mindestens) eine Produktgruppe jeder Zuführbahn zugeführt,
d) der Vertikalförderer fördert die von ihm aufgenommenen Produktgruppen jeweils von weiter unten nach weiter oben in eine (insbesondere ein und dieselbe bzw. für alle Aufnahmen gleiche) Ausschubposition, von der aus die Produktgruppen nachfolgend einbahnig in Richtung eines jeweils bereit gehaltenen Behälters weitergefördert werden,
e) der bereitgehaltene Behälter wird mit mindestens einer der Produktgruppen befüllt.

Erfindungsgemäß wird durch die vorgesehene Mehrbahnigkeit der Produktzufuhr zu der Befülleinrichtung erreicht, dass die maximal mögliche Zufuhr an Produkten zu der Befülleinrichtung vervielfacht (bei Zweibahnigkeit verdoppelt) werden kann. Der erfindungsgemäße Vertikalförderer der Befülleinrichtung sorgt dann dafür, dass die jeweils bereit gehaltenen Behälter dennoch weiterhin einbahnig mit den Produktgruppen befüllt werden können. Er dient somit als Wandler zwischen mehrbahniger Produktzufuhr und einbahniger Produktweiterbehandlung.

Soweit im Rahmen der Anmeldung von "horizontal" oder "vertikal" im Zusammenhang mit Ebenen oder Organen etc. gesprochen wird, so schließt dies geringfügige Neigungen, insbesondere bis zu 20°, der betroffenen Organe oder Ebenen zur Horizontalen oder Vertikalen mit ein.

Was in der Anmeldung beschriebene, übereinander angeordnete Förderbahnen oder Organe etc. betrifft, so können diese - soweit keine anderweitige Spezifizierung erfolgt - selbstverständlich sowohl in einer gemeinsamen (vertikalen) Ebene übereinander angeordnet sein, als auch seitlich versetzt zueinander übereinander, also in verschiedenen (vertikalen) Ebenen.

In der Regel wird die erfindungsgemäße Vorrichtung taktweise betrieben sein.

In einer bevorzugten Weiterbildung der Erfindung kann dann in einem ersten Arbeitstakt der Vorrichtung ein erster Satz von Aufnahmen des Vertikalförderers jeweils gleichzeitig nach weiter oben in den Zuführbahnen zugeordnete, jeweils auf Höhe der Zuführbahnen angeordnete Einschubpositionen bewegt werden (pro Zuführbahn eine zugeordnete Einschubposition), wobei jede Aufnahme in ihrer jeweiligen Einschubposition jeweils zur Aufnahme einer Produktgruppe der zugeordneten Zuführbahn bereit gehalten wird bzw. zur Aufnahme einer Produktgruppe, die entlang der der Einschubposition zugeordneten Zuführbahn zugeführt wird. Im unmittelbar nachfolgenden zweiten Arbeitstakt kann dann mindestens eine Produktgruppe mindestens einer Zuführbahn in die jeweilige, bereit gehaltene, zugeordnete Aufnahme eingeschoben werden, wobei im nächsten, dritten Arbeitstakt ein zweiter Satz von Aufnahmen jeweils gleichzeitig nach weiter oben in die jeweiligen Einschubpositionen bewegt wird.

Vorzugsweise kann für den Fall, dass die Befülleinrichtung (nur) zwei Zuführbahnen umfasst, nämlich eine untere und eine obere Zuführbahn, der unteren Zuführbahn eine jeweils auf deren Höhe angeordnete untere Einschubposition zugeordnet sein und der oberen Zuführbahn eine auf deren Höhe angeordnete obere Einschubposition, wobei in jede Einschubposition jeweils taktweise nacheinander eine Aufnahme bewegt wird. Dabei kann jede der in der jeweiligen Einschubposition befindlichen Aufnahmen zwar jeweils zur Aufnahme einer Produktgruppe der zugeordneten Zuführbahn bereit gehalten werden, aber vorgesehen sein, dass für jede dieser Einschubpositionen gilt, dass nur jeweils in jede zweite der nacheinander dorthin bewegten bzw. dort bereitgehaltenen Aufnahmen eine Produktgruppe eingeschoben wird.

Entsprechend kann mit anderen Worten für den obigen Fall, dass die Befülleinrichtung (nur) zwei Zuführbahnen umfasst, nämlich eine untere und eine obere Zuführbahn, und der unteren Zuführbahn eine jeweils auf deren Höhe angeordnete untere Einschubposition zugeordnet ist und der oberen Zuführbahn eine auf deren Höhe angeordnete obere Einschubposition, vorgesehen sein, dass in einem ersten Arbeitstakt ein oder der erste Satz Aufnahmen des Vertikalförderers jeweils gleichzeitig nach weiter oben in die den beiden Zuführbahnen zugeordneten Einschubpositionen bewegt wird, wobei jede dieser Aufnahmen in ihrer jeweiligen Einschubposition jeweils zur Aufnahme einer Produktgruppe der zugeordneten Zuführbahn bereit gehalten wird, und wobei nacheinander taktweise alternierend jeweils eine Produktgruppe in eine in der einen Einschubposition befindliche Aufnahme eingeschoben wird, während gleichzeitig in eine in der anderen Einschubposition befindliche Aufnahme keine Produktgruppe eingeschoben wird.

Weiter kann vorgesehen sein, dass in dem nächsten, zweiten Arbeitstakt nur in eine der beiden in den jeweiligen Einschubpositionen bereit gehaltenen Aufnahmen eine Produktgruppe eingeschoben wird, nämlich in die in der oberen Einschubposition bereit gehaltene Aufnahme, während die in der anderen Einschubposition, nämlich der unteren Einschubposition bereit gehaltene Aufnahme leer bleibt.

Dabei kann vorgesehen sein, dass in dem unmittelbar nachfolgenden dritten Arbeitstakt die im ersten Arbeitstakt an die untere Einschubposition bewegte Aufnahme in eine zwischen der unteren und der oberen Einschubposition befindliche Zwischenposition (in der keine Aufnahme einer Produktgruppe möglich ist) bewegt wird, eine im ersten Arbeitstakt in die Zwischenposition bewegte Aufnahme in die obere Einschubposition sowie eine im ersten Arbeitstakt in eine Position unterhalb der unteren Einschubposition bewegte Aufnahme in die untere Einschubposition, wobei in dem unmittelbar nachfolgenden vierten Arbeitstakt in die in der unteren Einschubposition befindliche Aufnahme eine Produktgruppe eingeschoben wird, während gleichzeitig in eine in der anderen Einschubposition befindliche Aufnahme keine Produktgruppe eingeschoben wird.

Dabei kann weiter vorgesehen sein, dass in dem unmittelbar nachfolgenden fünften Arbeitstakt die im dritten Arbeitstakt an die Zwischenposition bewegte Aufnahme in die obere Einschubposition bewegt wird, die an der im dritten Arbeitstakt in die untere Position bewegte Aufnahme in die Zwischenposition sowie eine im dritten Arbeitstakt in eine Position unterhalb der unteren Einschubposition bewegte Aufnahme in die untere Einschubposition, wobei in die in der oberen Einschubposition befindliche Aufnahme im sechsten Arbeitstakt eine Produktgruppe eingeschoben wird, während die an der unteren Einschubposition befindliche Aufnahme leer bleibt.

Vorzugsweise wird demnach pro (in der obigen Weise definiertem) Arbeitstakt in jeder Einschubposition eine Aufnahme für eine Produktgruppe bereitgehalten, wobei bezogen auf die jeweilige Einschubposition nur jeweils in jedem dritten Arbeitstakt in die dort jeweils bereitgehaltene Aufnahme eine Produktgruppe eingeschoben wird.

Was das spätere Ausfördern der Produktgruppen aus den jeweiligen Aufnahmen des Vertikalförderers betrifft, so werden die Aufnahmen vorzugsweise taktweise nacheinander in die Ausschubposition bewegt, wobei dann diejenige Produktgruppe, die sich in der gerade an der Ausschubposition befindlichen Aufnahme befindet, mittels eines Schiebers bevorzugt linear bzw. geradlinig aus der Aufnahme ausgeschoben und entlang einer horizontalen Förderebene in den bereit gehaltenen Behälter eingeschoben wird.

Gemäß einer weiteren Besonderheit verfügt der Vertikalförderer der Befülleinrichtung über zwei separate, in einer gemeinsamen aufrechten Ebene jeweils umlaufend - insbesondere entlang einer (geschlossenen) ovalen Bewegungsbahn - sowie dabei jeweils abschnittsweise entlang paralleler, aufrechter Bahnabschnitte geführte Gruppen von Schlitten, wobei jeweils zwei gegenüberliegende Schlitten der beiden Schlittengruppen während einer gleichzeitigen Aufwärtsbewegung entlang der parallelen Bahnabschnitte jeweils derart synchronisiert bewegt werden, dass sie dabei in einer gemeinsamen (bewegten) im Wesentlichen horizontalen Ebene liegen bzw. miteinander fluchten und zusammen jeweils eine der Aufnahmen des Vertikalförderers bilden.

Bevorzugt bilden dabei die Schlitten bzw. jeder Schlitten der einen Schlittengruppe jeweils mit einem zugeordneten Schlitten der anderen Schlittengruppe ein Paar zur Bildung der jeweiligen Aufnahmen, wobei die Schlitten jeweils über eine - insbesondere an einem entlang der Bewegungsbahn geführten Laufwagen des Schlittens beweglich gelagerte - Schlittenplattform verfügen, die bei jedem Schlitten jedes Schlittenpaar jeweils bevor die Schlitten des Paares in die unterste Einschubposition bewegt werden, insbesondere synchron relativ zu einem Festteil des jeweiligen Schlittens von einer zurückgezogenen oder eingefahrenen Stellung, in der der jeweilige Schlitten quer zu seiner Bewegungsbahn kürzer ist, in eine ausgefahrene Stellung bewegt werden, in der der Schlitten quer zu seiner Bewegungsbahn länger ist, und in der sich aufeinander zu gerichtete freien Enden der beiden Plattformen der miteinander fluchtenden Schlitten des Schlittenpaares in einer horizontalen Ebene unmittelbar gegenüberliegen bzw. aneinander angrenzen, insbesondere lückenlos oder im Wesentlichen lückenlos, und jeweils in dieser Stellung gemeinsam in einer Aufwärtsbewegung von unten nach oben bewegt werden.

In weiterer Ausbildung dieses Gedankens können die Plattformen der Schlitten des Schlittenpaares jeweils von der ausgefahrenen Stellung in die zurückgezogene Stellung bewegt werden, nachdem die jeweilige Packungsgruppe, die sich in der durch die Schlitten gebildeten Aufnahme befindet, in der Ausschubposition der Aufnahme aus dieser in Richtung des Behälters ausgefördert wurde. Nachfolgend werden dann die Schlitten des Schlittenpaares bei einer ihrer Aufwärtsbewegung nachfolgenden Abwärtsbewegung jeweils mit zurückgezogener Plattform nach unten bewegt.

In weiterer Konkretisierung der erfindungsgemäßen Maßnahmen können die Packungen von den übereinander angeordneten Förderbahnen jeweils nacheinander in einzelne Fächer der jeweils zugeordneten, als Fächerförderer ausgebildeten Gruppierförderer eingeschoben werden, nachfolgend gruppenweise von den Gruppierförderern quer zu diesen Förderbahnen weitergefördert werden und nachfolgend jeweils gruppenweise aus den Fächern quer zur Förderrichtung der Gruppierförderer entlang der Zuführbahnen in die in jeweils in zugeordneten Einschubpositionen befindliche Aufnahmen des Vertikalförderers eingeschoben werden.

Eine erfindungsgemäße Vorrichtung zum Befüllen von Behältern, insbesondere eine zur Durchführung des obigen Verfahrens geeignete, umfasst einen Horizontalförderer zum horizontalen Zuführen der Produkte zu der Befülleinrichtung der Vorrichtung, in der die Produkte unter Zusammenfassung zu den einzelnen Produktgruppen nachfolgend gruppiert und in den bereitgehaltenen Behälter gefüllt werden, wobei die Befülleinrichtung entsprechend über ein mehrbahniges Gruppieraggregat verfügt mit mehreren übereinander, insbesondere jeweils in einer horizontalen Ebene angeordneten Gruppierförderern, mit denen die Produkte jeweils zu Produktgruppen gruppiert werden, wobei der Horizontalförderer als ein stromauf des Gruppieraggregats angeordnetes, mehrbahniges Horizontalförderaggregat mit mehreren übereinander angeordneten Einzelförderern ausgebildet ist, die die Produkte jeweils horizontal zu jeweils einem der dem jeweiligen Einzelförderer zugeordneten Gruppierförderer zufördern, und wobei die Befülleinrichtung stromab des Gruppieraggregats einen einbahnigen Vertikalförderer aufweist mit mehreren übereinander angeordneten Aufnahmen für jeweils (mindestens) eine Produktgruppe, dessen Aufnahmen die durch das Gruppieraggregat gruppierten Produktgruppen mehrbahnig entlang von mehreren übereinander angeordneten Zuführbahnen zuführbar sind.

Der Vertikalförderer weist dabei bevorzugt zwei separate Teilförderer auf mit jeweils in einer gemeinsamen aufrechten Ebene jeweils umlaufend insbesondere entlang einer insbesondere ovalen Bewegungsbahn sowie dabei jeweils abschnittsweise entlang paralleler, aufrechter Bahnabschnitte geführten Gruppen von Schlitten, wobei während einer gleichzeitigen Aufwärtsbewegung sich gegenüberliegende Schlitten der beiden Schlittengruppen der Teilförderer jeweils ein Paar zur Bildung einer der Aufnahmen des Vertikalförderers bilden.

Vorzugsweise können dabei jeweils zwei Schlitten entlang der parallelen Bahnabschnitte jeweils derart synchronisiert bewegt werden, dass sie dabei in einer (bewegten) horizontalen Ebene miteinander fluchten und gemeinsam jeweils eine der Aufnahmen des Vertikalförderers bilden.

Vorzugsweise ist die Erstreckung der Schlitten dabei jeweils quer zu ihrer Bewegungsbahn veränderbar, insbesondere durch die teleskopisch, relativ zu dem Festteil des Schlittens ein- bzw. ausfahrbare, insbesondere verschieblich an dem Festteil gelagerte Schlittenplattform.

Weitere Merkmale der Erfindung ergeben sich aus den beigefügten Patentansprüchen, der nachfolgenden Beschreibung eines bevorzugten Ausführungsbeispiels der Erfindung sowie aus den beigefügten Zeichnungen. Darin zeigt:

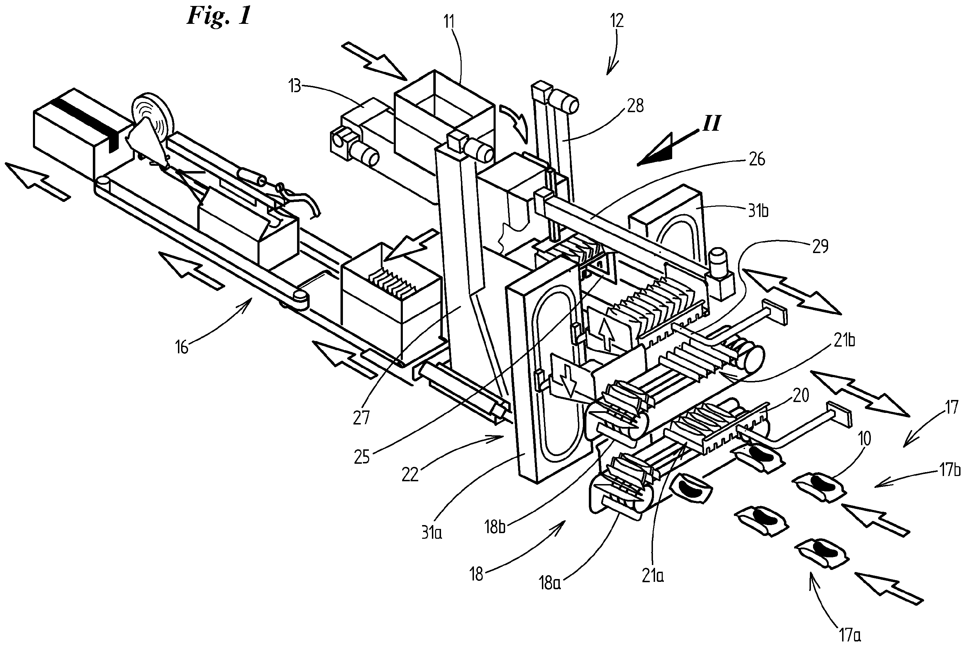

- Fig. 1: eine erfindungsgemäße Vorrichtung zum Befüllen von Behältern mit Produkten in schematischer Schrägansicht,
- Fig. 2: die Vorrichtung aus Fig. 1 in einer Seitenansicht entsprechend der Blickrichtung II in Fig. 1,

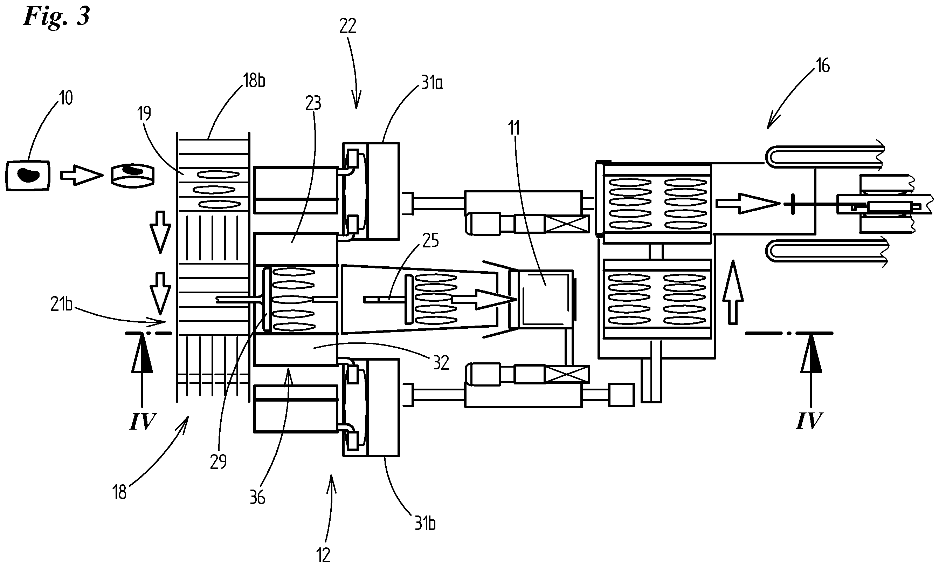

- Fig. 3: einen Horizontalschnitt durch die Vorrichtung entsprechend Schnittlinie III-III in Fig. 2,
- Fig. 4: einen Längsschnitt durch die Vorrichtung gemäß Schnittlinie IV-IV aus Fig. 3,
- Fig. 5: eine Darstellung analog zu Fig. 4, allerdings in einer späteren Befüllungsphase,

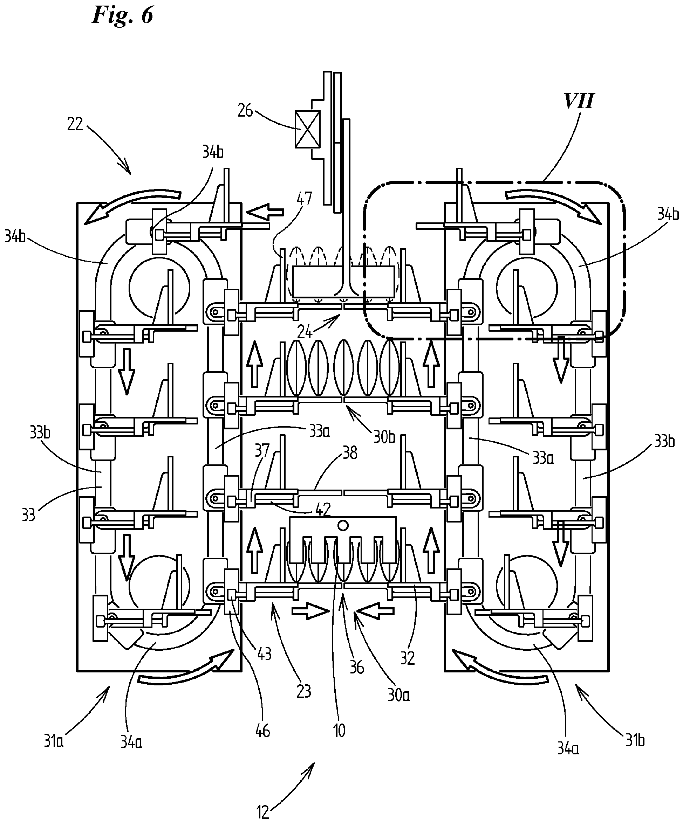

- Fig. 6: einen Querschnitt der Vorrichtung entlang der Schnittlinie VI-VI aus Fig. 4,
- Fig. 7: die Einzelheit VII aus Fig. 6 in vergrößerter Darstellung,
- Fig. 8: einen Schnitt durch die Vorrichtung gemäß der Schnittlinie VIII-VIII aus Fig. 7,
- Fig. 9: einen Schnitt durch die Vorrichtung gemäß der Schnittlinie IX-IX in Fig. 8,
- Fig. 10: eine Darstellung entsprechend Fig. 9 in einer späteren Phase der Vorrichtung,
- Fig. 11: eine Darstellung entsprechend Fig. 10 in einer nochmals späteren Phase der Vorrichtung,
- Fig. 12: eine vereinfachte Darstellung der Bewegungen der Schlitten eines Vertikalförderers der Vorrichtung.

Das in den Figuren gezeigte Ausführungsbeispiel befasst sich mit der Befüllung von Packungen, insbesondere Beuteln, in Kartons. Da die Erfindung jedoch nicht nur auf Packungen beschränkt ist, wird nachfolgend der allgemeine Begriff Produkt 10 benutzt. Entsprechend wird nachfolgend auch allgemein auf Behälter 11 Bezug genommen statt auf Kartons.

Die Behälter 11 werden entlang eines (horizontalen) Zuförderers 13 einer Befülleinrichtung 12 zugeführt. Im Bereich der Befülleinrichtung 12 werden die Behälter 11 mit Produkten 10 befüllt.

Der Transport der Behälter 11 auf dem Zuförderer 13 erfolgt leer bzw. unbefüllt. Im vorliegenden Ausführungsbeispiel werden die Behälter 11 stehend auf dem Zuförderer 13 transportiert, nämlich mit geöffneter Oberseite, über die die Befüllung erfolgt.

In der Befülleinrichtung 12 werden die Behälter 11 von Greifern 14 erfasst, die entlang jeweils einer eigenen Linearachse 27, 28 in aufrechter Richtung auf- und abbewegbar sind. Zudem sind die Greifer 14 verschwenk- bzw. verdrehbar gelagert.

Nachdem ein Behälter 11 von einem Greifer 14 erfasst wurde, wird der Behälter 11 zunächst um etwa 90° gedreht bzw. verschwenkt, sodass die offene Seite des Behälters 11 seitwärts weist, um den Behälter 11 entsprechend zu befüllen. Nach dem Befüllen wird der befüllte Behälter 11 mit den Greifern 14 entlang der Linearachsen 26, 27 abwärtsbewegt, zurückgedreht bzw. -geschwenkt und abgesetzt. Danach wird der befüllte Behälter 11 auf einem Abförderer 16 abtransportiert und verschlossen.

Bezüglich weiterer Einzelheiten wird auf die DE 10 2016 014 333 A1 verwiesen, deren Inhalt hiermit in die vorliegende Anmeldung integriert wird.

Die Produkte 10 werden der Befülleinrichtung 12 mittels eines Horizontalförderaggregats 17 mehrbahnig zugeführt. Zu diesem Zweck verfügt das Horizontalförderaggregat 17 über mehrere, vorliegend zwei übereinander angeordnete Einzelförderer 17a, 17b. Diese fördern die Produkte 10 nacheinander mit Abstand zueinander einem Gruppieraggregat 18 mit mehreren, nämlich vorliegend zwei übereinander angeordneten Gruppierförderern 18a, 18b zu.

Bei den Einzelförderern 17a, 17b handelt es sich vorliegend um Endlos-Bandförderer.

Die Gruppierförderer 18a, 18b sind Fächerförderer mit einzelnen Fächern 19, in die die Produkte 10 jeweils vorliegend einzeln eingeschoben werden.

Die Einzelförderer 17a, 17b sind jeweils den Gruppierförderern 18a bzw. 18b zugeordnet.

Vorliegend derart, dass die Förderbahn des Einzelförderers 17a auf Höhe des Gruppierförderers 18a endet, sodass jeweils mittels eines Schiebers 20 das jeweilige, zuvorderst auf dem Einzelförderer 17a befindliche Produkt in ein bereitgehaltenes Fach 19 des Gruppierförderers 18a eingeschoben werden kann.

In analoger Weise endet die Förderbahn des Einzelförderers 17b auf Höhe der Förderbahn des Gruppierförderers 18b und wird durch einen (nicht dargestellten) weiteren Schieber 20 in das jeweilige Fach 19 des Gruppierförderers 18b eingeschoben.

Senkrecht zur Förderrichtung der Einzelförderer 17a, 17b, allerdings in derselben Horizontalebene, fördern die Gruppierförderer 18a, 18b die jeweils gebildeten Produktgruppen jeweils seitlich zu einer Ausschubstation 21a bzw. 21b, aus der sie jeweils mit einem zugeordneten Schieber 29 (nur der dem oberen Gruppierförderer 18a zugeordnete Schieber 29 ist in den Zeichnungen dargestellt) entlang von horizontalen Zuführbahnen einem Vertikalförderer 22 zugeführt werden.

Der Vertikalförderer 22 führt die ihm mehrbahnig zugeführten Produktgruppen dann dem jeweils bereitgehaltenen Behälter 11 einbahnig zu.

Zu diesem Zweck verfügt er unter anderem über mehrere Aufnahmen 23, in die die jeweils von den Gruppierförderern 18a oder 18b stammenden Produktgruppen eingeschoben werden können.

Der Vertikalförderer 22 bewegt die einzelnen Aufnahmen 23 bzw. die in diesen jeweils enthaltene Produktgruppe jeweils nach weiter oben in eine Ausschubposition 24, in der sie durch einen Schieber 25, der durch eine Linearachse 26 geführt ist, entlang einer horizontalen, geradlinigen Förderbahn in den Behälter 11 geschoben wird.

Der Vertikalförderer 22 ist taktweise angetrieben und weist mehrere übereinander angeordnete Aufnahmen 23 für jeweils (mindestens) eine Produktgruppe auf. Die Aufnahmen 23 können jeweils nacheinander in eine untere oder eine obere Einschubposition 30a bzw. 30b bewegt werden, in der die jeweilige Aufnahme 23 mit dem jeweiligen Schieber 29 mit einer Produktgruppe befüllt werden kann. Die untere Einschubposition 30a ist dabei dem unteren Gruppierförderer 18a zugeordnet bzw. die obere Einschubposition 30b dem oberen Gruppierförderer 18b.

Die taktweise, sich zyklisch wiederholende Steuerung des Vertikalförderers 22 erfolgt zur zeit- bzw. leistungsmäßigen Optimierung der Abläufe vorzugsweise derart, dass in einem ersten Arbeitstakt eine Aufnahme 23 von einer unter der unteren Einschubstation 30a befindlichen Position in die untere Einschubposition 30a bewegt wird, eine weitere, über dieser angeordnete Aufnahme 23 in eine Zwischenposition zwischen der unteren Einschubposition 30a und der oberen Einschubposition 30b (in der keine Produktgruppenaufnahme möglich ist) sowie eine weitere Aufnahme 23 von der Zwischenposition in die obere Einschubposition 30b.

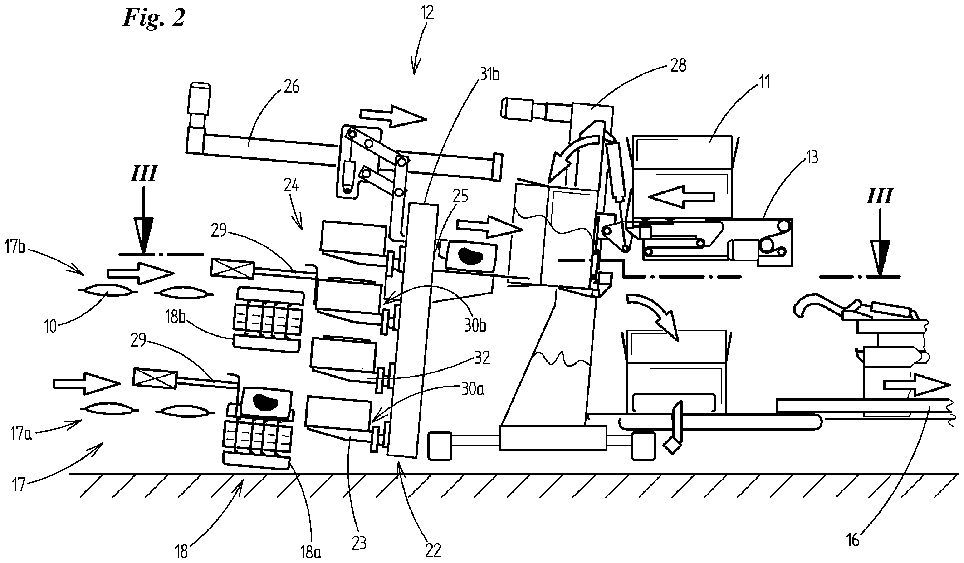

in einem zweiten Arbeitstakt wird dann nur in eine der beiden in den jeweiligen Einschubpositionen 30a bzw. 30b bereit gehaltenen Aufnahmen 23 eine Produktgruppe eingeschoben. In der in Fig. 2 gezeigten Bewegungsphase des zweiten Arbeitstakts wurde beispielsweise gerade eine Produktgruppe in die in der oberen Einschubposition 30b befindliche Aufnahme 23 eingeschoben. In diesem Arbeitstakt wird dabei in die an der unteren Einschubposition 30a befindliche Aufnahme 23 keine Produktgruppe eingeschoben. Diese bleibt entsprechend leer. Die an der Zwischenposition befindliche Aufnahme 23 wurde bereits zuvor in dem Arbeitstakt unmittelbar vor dem ersten Arbeitstakt befüllt.

Im nächsten, dritten Arbeitstakt werden sämtliche Aufnahmen 23 einen Schritt weiter nach oben bewegt, nämlich die im ersten Arbeitstakt an die untere Einschubposition 30a bewegte Aufnahme 23 in eine zwischen der unteren und der oberen Einschubposition 30a bzw. 30b befindliche Zwischenposition, die im ersten Arbeitstakt in die Zwischenposition bewegte Aufnahme 23 in die obere Einschubposition 30b sowie eine bzw. die im ersten Arbeitstakt in eine Position unterhalb der unteren Einschubposition 30a bewegte Aufnahme 23 in die untere Einschubposition 30a.

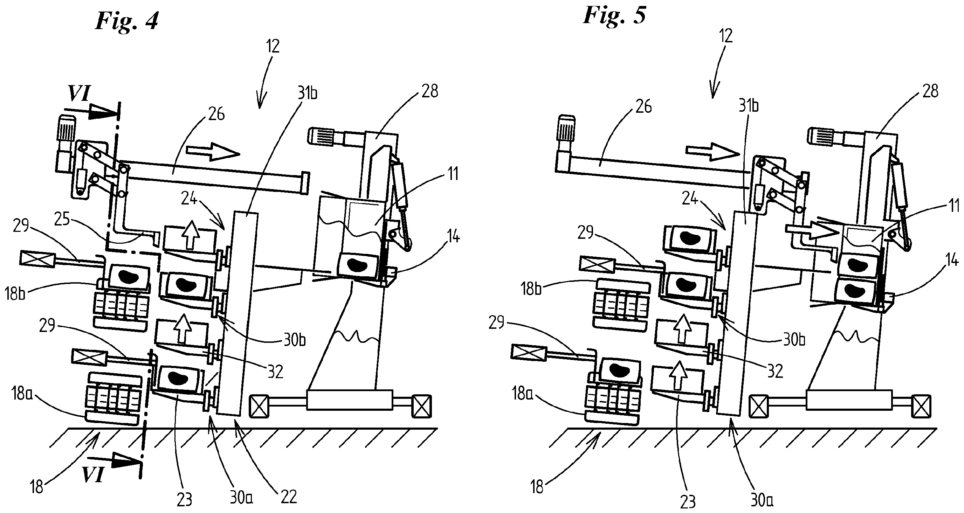

In dem unmittelbar nachfolgenden vierten Arbeitstakt, vgl. Fig. 4, wird dann in die in der unteren Einschubposition 30a befindliche Aufnahme 23 keine Produktgruppe eingeschoben, da sich in ihr bereits eine Produktgruppe befindet.

In dem in dem unmittelbar nachfolgenden fünften Arbeitstakt wird die im dritten Arbeitstakt an die Zwischenposition bewegte Aufnahme 23 in die obere Einschubposition 30b bewegt, die an der im dritten Arbeitstakt in die untere Einschubposition 30a bewegte Aufnahme 23 in die Zwischenposition sowie eine im dritten Arbeitstakt in eine Position unterhalb der unteren Einschubposition 30a bewegte Aufnahme 23 in die untere Einschubposition 30a. In die dann in der oberen Einschubposition 30b befindliche Aufnahme 23 wird schließlich im sechsten Arbeitstakt eine Produktgruppe eingeschoben, während die an der unteren Einschubposition 30a befindliche Aufnahme 23 leer bleibt.

Letztlich wird zwar pro Arbeitstakt in jeder Einschubposition 30a, 30b eine Aufnahme 23 für eine Produktgruppe bereitgehalten, allerdings nur jeweils in jedem dritten Arbeitstakt wird eine dort bereitgehaltene Aufnahme 23 auch mit einer Produktgruppe befüllt.

Oder anders ausgedrückt wird an einer Einschubposition 30a, 30b jeweils nur in jede zweite der nacheinander dorthin bewegten Aufnahmen 23 eine Produktgruppe eingeschoben.

Im weiteren Ablauf werden dann die Aufnahmen 23 jeweils taktweise nacheinander nach weiter oben in die (allen Aufnahmen 23 gemeinsame) Ausschubposition 24 bewegt und, vgl. oben, die jeweilige Produktgruppe der sich dann dort befindenden Aufnahme 23 mittels des Schiebers 25 ausgeschoben und entlang der horizontalen, geradlinigen Förderbahn in den bereit gehaltenen Behälter 11 eingeschoben.

Der konstruktive Aufbau des Vertikalförderers 22 stellt (ebenfalls) eine Besonderheit dar. Er weist zwei separate Teilförderer auf, nämlich vorliegend zwei paternosterartige Schlittenaggregate 31a, 31b auf. Jedes Schlittenaggregat 31a, 31b verfügt dabei über eine Gruppe von Schlitten 32, die jeweils entlang einer in einer aufrechten bzw. vertikalen Ebene angeordneten, geschlossenen, ovalen Bewegungsbahn 33 mit jeweils zwei geradlinigen parallelen Bahnabschnitten 33a bzw. 33b sowie jeweils einem unteren und einem oberen, gekrümmten Wendebahnabschnitt 34a bzw. 34b geführt sind.

Es versteht sich, dass jedes Schlittenaggregat 31a, 31b mit einem Antrieb wirkverbunden ist, insbesondere einem Elektromotor, der für die Bewegung der Schlitten 32 entlang der Bewegungsbahn 33 sorgt.

Jeweils zwei Schlitten 32 der beiden Schlittenaggregate 31a, 31b werden während einer gleichzeitigen Aufwärtsbewegung entlang des jeweiligen Bahnabschnitts 31a jeweils unter Bildung eines Schlittenpaares 36 derart synchronisiert bewegt, dass sie sich bei dieser Aufwärtsbewegung in einer gemeinsamen (bewegten) horizontalen Ebene gegenüber liegen bzw. miteinander fluchten und zusammen jeweils eine der Aufnahmen 23 des Vertikalförderers 22 bilden.

Die Schlitten 32 eines Schlittenpaares 36 bzw. alle Schlitten 32 verfügen dabei jeweils über ein Festteil 37, sowie eine relativ zu dem Festteil 37 teleskopisch verfahrbare Schlittenplattform 38, wobei letzter - vorzugsweise zusammen mit dem Festteil 37 - den Boden der jeweiligen, durch das Schlittenpaar 36 gebildeten Aufnahme 23 bilden.

Weiter weist jeder Schlitten 32, insbesondere das Festteil 37, eine seitliche Stützwand 47 auf, die zusammen mit einer bzw. der entsprechenden Stützwand 47 des anderen Schlittens 32 eines Schlittenpaares 36 aufrechte Seitenwände der durch das Paar 36 gebildeten Aufnahme 32 bilden.

Der konstruktive Aufbau jedes Schlittenaggregats 31a, 31b ist dabei derart gewählt, dass die Schlittenplattform 38 jedes Schlittens 32 jedes Schlittenpaares 36 jeweils bevor die Schlitten 32 des Paares 36 unter Bildung der jeweilige Aufnahme 32 in die untere Einschubposition 30a bewegt werden relativ zu dem Festteil 37 von einer zurückgezogenen Stellung, in der der jeweilige Schlitten 32 quer zu seiner Bewegungsbahn 33 kürzer ist, in eine ausgefahrene Stellung bewegt wird, in der der Schlitten 32 quer zu seiner Bewegungsbahn 33 länger ist, und in der sich aufeinander zu gerichtete freien Enden der beiden Schlitten 32 bzw. der Plattformen 38 der miteinander fluchtenden Schlitten 32 des Schlittenpaares 36 unmittelbar gegenüberliegen, wobei die Schlitten 32 jeweils in dieser Stellung in einer Aufwärtsbewegung von unten nach oben bewegt werden.

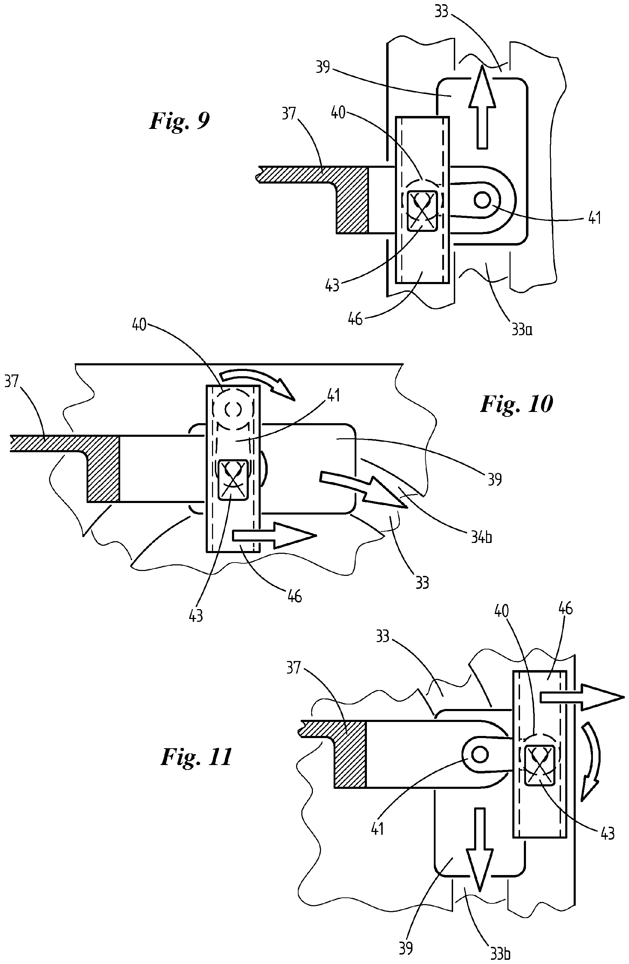

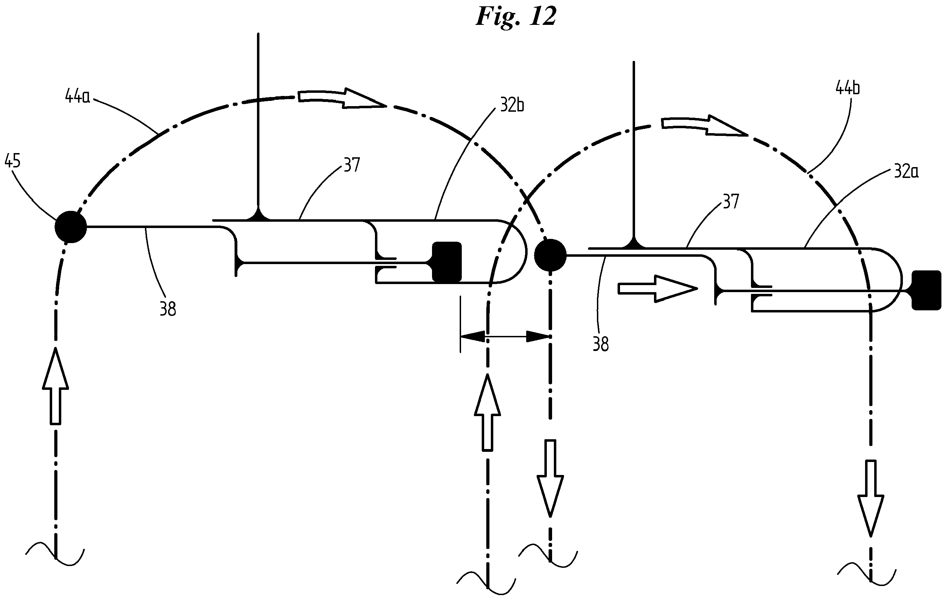

Hierfür ist die teleskopisch ausfahrbare Schlittenplattform 38 jedes Schlittens 32 an einem entlang der Bewegungsbahn 33 geführten Laufwagen 39 des Schlittens 32 beweglich gelagert. Vorliegend über eine fest über eine Kurbel 41 mit dem Laufwagen 39 verbundene, bewegliche Rolle 40. Und zwar derart, dass sich die Schlittenplattform 38 jeweils bei Bewegung des Laufwagens 39 in dem aufrechten Bahnabschnitt 33a, in dem der jeweilige Laufwagen 39 bzw. der Schlitten 32 von unten nach oben bewegt wird, vgl. Fig. 9 und Fig. 12, in dem ausgefahren Zustand befindet und bei Bewegung des Laufwagens 39 in dem parallelen aufrechten Bahnabschnitt 33b der Bewegungsbahn 33, in dem der Laufwagen 39 bzw. der Schlitten 32 von oben nach unten bewegt wird, vgl. Fig. 11, in dem eingefahrenen Zustand.

Der Übergang von dem ausgefahrenem Zustand in den eingefahrenem Zustand erfolgt dabei in dem oberen, gekrümmten, zwischen den beiden aufrechten Bahnabschnitten 33a, 33b befindlichen Wendebahnabschnitt 34a der Bewegungsbahn 33 und der umgekehrte Übergang von dem eingefahrenen Zustand in den ausgefahrenen Zustand in dem unteren, gekrümmten, zwischen den beiden aufrechten Bahnabschnitten 33a, 33b befindlichen, gekrümmten Wendebahnabschnitt 34b.

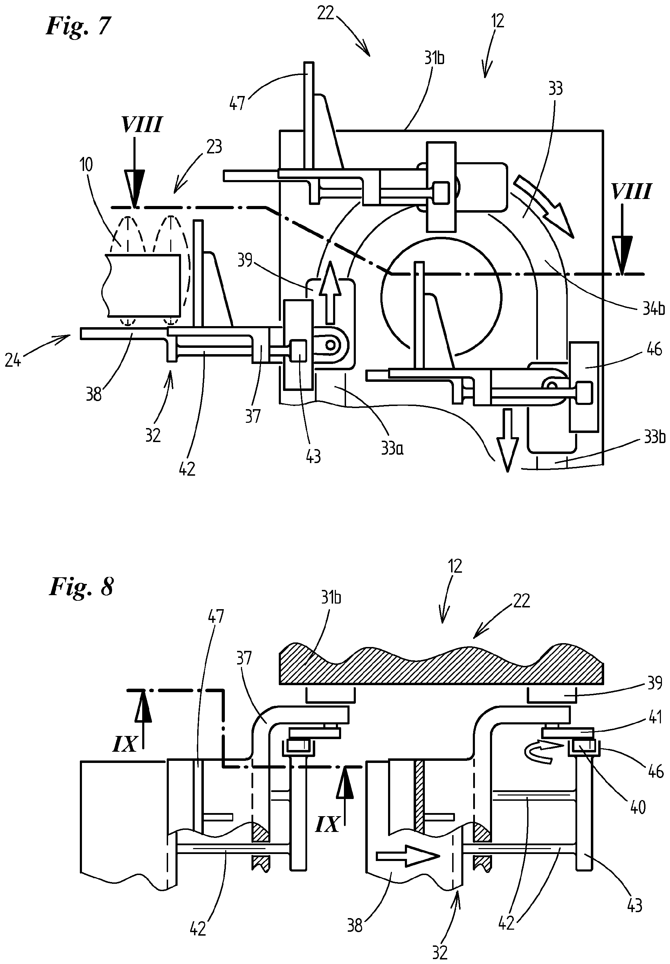

Konkret ist eine mit der Schlittenplattform 38 fest über ein oder mehrere längliche Führungsstäbe 42 verbundene, längliche, senkrecht zur Ebene der Bewegungsbahn 33 gerichtete Quertraverse 43 an der an der Kurbel 41 drehbar gelagerten Rolle 40 drehbar gelagert, indem ein an die Außenkontur der Rolle 40 angepasstes, U-förmiges Führungsteil der Quertraverse 43 die Rolle 40 seitlich umfasst, vgl. Fig. 8.

Die Führungsstäbe 42 erstrecken sich parallel mit Abstand zur Ebene der Bewegungsbahn 33 und sind an dem (ebenfalls drehbar an dem Laufwagen 39 gelagerten) Festteil 37 längsverschieblich gelagert.

Die vorgenannte Lagerung bewirkt, dass die Quertraverse 43, die bei Bewegung des Laufwagens 39 innerhalb der Bewegungsbahn 33a links von dem Laufwagen 39 angeordnet ist, bei Bewegung des Laufwagens 39 entlang des oberen Wendebahnabschnitts 34b verschwenkt wird bzw. ihre Relativposition ändert, sodass sie anschließend bei Bewegung des Laufwagens 39 entlang der Bewegungsbahn 33b relativ zu dem Laufwagen 39 nach rechts verschwenkt wird. Entsprechend bewegt sich die über die Führungsstäbe 42 beweglich an dem Festteil 37 gelagerte Schlittenplattform 38 relativ zu diesem von der ausgefahrenen in die eingefahrene Position.

Bei der späteren Bewegung des Schlittens 32 entlang des unteren Wendebahnabschnitts 34a laufen diese Vorgänge umgekehrt ab.

Wie in Fig. 12 schematisch dargestellt ist, führt dies auch dazu, dass ein nachlaufender, in einem ausgefahrenen Zustand befindlicher, entlang des Bahnabschnitts 33a geführter Schlitten 32b eines Schlittenaggregats 31a, 31b auf seinem Weg nach oben nicht mit einem vorlaufenden Schlitten 32a kollidiert, der bereits im Bahnabschnitt 33b nach unten bewegt wird, da sich dieser im eingezogenen Zustand befindet. In Fig. 12 ist zur Verdeutlichung dieser Zusammenhänge mit der Bezugsziffer 44a die strichpunktierte Bewegungsbahn der äußeren Störkontur 45 der beweglichen Schlittenplattform 38 des nachfolgenden Schlittens 32b bezeichnet und mit der Bezugsziffer 44b die Bewegungsbahn des Laufwagens 39 des vorlaufenden Schlittens 32b. Das Oval der Bewegungsbahn 33 jedes Schlittenaggregats 31a, 31b kann entsprechend sehr kompakt ausgelegt werden.

**Bezugszeichenliste**

| | | | |
|---|---|---|---|
| 10 | Produkt | 33a | geradliniger Bahnabschnitt |
| 11 | Behälter | 33b | geradliniger Bahnabschnitt |
| 12 | Befülleinrichtung | 34a | Wendebahnabschnitt |
| 13 | Zuförderer | 34b | Wendebahnabschnitt |
| 14 | Greifer | 36 | Schlittenpaar |
| 16 | Abförderer | 37 | Festteil |
| 17 | Horizontalförderaggregat | 38 | Schlittenplattform |
| 17a | Einzelförderer | 39 | Laufwagen |
| 17b | Einzelförderer | 40 | Rolle |
| 18 | Gruppieraggregat | 41 | Kurbel |
| 18a | Gruppierförderer | 42 | Führungsstäbe |
| 18b | Gruppierförderer | 43 | Quertraverse |
| 19 | Fach | 44a | Bewegungsbahn Störkontur |
| 20 | Schieber | 44b | Bewegungsbahn Laufwagen |
| 21 a | Ausschubstation | 45 | Störkontur |
| 21b | Ausschubstation | 46 | U-förmige Führung |
| 22 | Vertikalförderer | 47 | Stützwand |
| 23 | Aufnahme | | |
| 24 | Ausschubposition | | |
| 25 | Schieber | | |
| 26 | Linearachse | | |
| 27 | Linearachse | | |
| 28 | Linearachse | | |
| 29 | Schieber | | |
| 30a | Einschubposition | | |
| 30b | Einschubposition | | |
| 31a | Schlittenaggregat | | |
| 31b | Schlittenaggregat | | |
| 32 | Schlitten | | |
| 32a | vorlaufender Schlitten | | |
| 32b | nachlaufender Schlitten | | |
| 33 | Bewegungsbahn | | |

## Patentansprüche

1. Verfahren zum Befüllen von Behältern, insbesondere Kartons, mit Produkten (10), insbesondere Packungen, bei dem die Produkte (10) nacheinander horizontal einer Befülleinrichtung (12) zugefördert werden, in der die Produkte (10) unter Zusammenfassung zu einzelnen Produktgruppen nachfolgend gruppiert werden und jeweils ein bereitgehaltener Behälter (11), der der Befülleinrichtung (12) insbesondere horizontal zugefördert wird, einbahnig mit ein oder mehreren Produktgruppen befüllt wird, wobei die befüllten Behälter (11) im Anschluss insbesondere horizontal abtransportiert werden, **gekennzeichnet durch** folgende Maßnahmen:
a) die Produkte (10) werden der Befülleinrichtung (12) mehrbahnig zugefördert, nämlich entlang von mehreren übereinander angeordneten Förderbahnen,
b) die der Befülleinrichtung (12) entlang der Förderbahnen zugeförderten Produkte (10) werden von der Befülleinrichtung (12) mehrbahnig zu Produktgruppen gruppiert, insbesondere von den Förderbahnen jeweils zugeordneten, übereinander angeordneten Gruppierförderern der Befülleinrichtung (12), bevorzugt von übereinander angeordneten Fächerförderern,
c) die Produktgruppen werden nachfolgend mehrbahnig nacheinander entlang von übereinander angeordneten Zuführbahnen einem gemeinsamen umlaufenden Vertikalförderer (22) der Befülleinrichtung (12) mit mehreren übereinander angeordneten Aufnahmen (23) für jeweils mindestens eine Produktgruppe jeder Zuführbahn zugeführt,
d) der Vertikalförderer (22) fördert die von ihm aufgenommenen Produktgruppen jeweils von weiter unten nach weiter oben in eine Ausschubposition, von der aus die Produktgruppen nachfolgend einbahnig in Richtung eines jeweils bereit gehaltenen Behälters (11) weitergefördert werden,
e) der bereitgehaltene Behälter (11) wird mit mindestens einer der Produktgruppen befüllt.

2. Verfahren gemäß Anspruch 1, **dadurch gekennzeichnet, dass** in einem ersten Arbeitstakt ein erster Satz Aufnahmen (23) des Vertikalförderers (22) jeweils gleichzeitig nach weiter oben in den Zuführbahnen zugeordnete, jeweils auf Höhe einer der Zuführbahnen angeordnete Einschubpositionen bewegt wird, dass jede dieser Aufnahmen (23) in ihrer jeweiligen Einschubposition jeweils zur Aufnahme einer Produktgruppe der zugeordneten Zuführbahn bereit gehalten wird, dass unmittelbar im nachfolgenden zweiten Arbeitstakt mindestens eine Produktgruppe mindestens einer Zuführbahn in die jeweils bereit gehaltene, zugeordnete Aufnahme (23) eingeschoben wird, und dass im unmittelbar nachfolgenden dritten Arbeitstakt ein zweiter Satz von Aufnahmen (23) jeweils gleichzeitig nach weiter oben in die Einschubpositionen bewegt wird.

3. Verfahren gemäß einem oder mehreren der vorhergehenden Ansprüche, **dadurch gekennzeichnet, dass** für den Fall, dass die Befülleinrichtung (12) zwei Zuführbahnen umfasst, nämlich eine untere und eine obere Zuführbahn, der unteren Zuführbahn eine jeweils auf deren Höhe angeordnete untere Einschubposition zugeordnet ist und der oberen Zuführbahn eine auf deren Höhe angeordnete obere Einschubposition, dass in jede Einschubposition jeweils taktweise nacheinander eine Aufnahme (23) bewegt wird, dass jede der in der jeweiligen Einschubposition befindlichen Aufnahmen (23) jeweils zur Aufnahme einer Produktgruppe der zugeordneten Zuführbahn bereit gehalten wird, und dass für jede dieser Einschubpositionen gilt, dass nur jeweils in jede zweite der nacheinander dorthin bewegten Aufnahmen (23) eine Produktgruppe eingeschoben wird.

4. Verfahren gemäß einem oder mehreren der vorhergehenden Ansprüche, **dadurch gekennzeichnet, dass** in einem ersten Arbeitstakt ein erster Satz Aufnahmen (23) des Vertikalförderers (22) jeweils gleichzeitig nach weiter oben in die den beiden Zuführbahnen zugeordneten Einschubpositionen bewegt wird, wobei jede dieser Aufnahmen (23) in ihrer jeweiligen Einschubposition jeweils zur Aufnahme einer Produktgruppe der zugeordneten Zuführbahn bereit gehalten wird, und dass nacheinander taktweise alternierend jeweils eine Produktgruppe in eine in der einen Einschubposition befindliche Aufnahme (23) eingeschoben wird, während gleichzeitig in eine in der anderen Einschubposition befindliche Aufnahme (23) keine Produktgruppe eingeschoben wird.

5. Verfahren gemäß Anspruch 4, **dadurch gekennzeichnet, dass** in dem unmittelbar nachfolgenden zweiten Arbeitstakt nur in eine der beiden in den jeweiligen Einschubpositionen bereit gehaltenen Aufnahmen (23) eine Produktgruppe eingeschoben wird, nämlich in die in der oberen Einschubposition bereit gehaltene Aufnahme (23), während die in der anderen Einschubposition, nämlich der unteren Einschubposition bereit gehaltene Aufnahme (23) leer bleibt.

6. Verfahren gemäß Anspruch 5, **dadurch gekennzeichnet, dass** in dem unmittelbar nachfolgenden dritten Arbeitstakt die im ersten Arbeitstakt an die untere Einschubposition bewegte Aufnahme (23) in eine zwischen der unteren und der oberen Einschubposition befindliche Zwischenposition bewegt wird, eine im ersten Arbeitstakt in die Zwischenposition bewegte Aufnahme (23) in die obere Einschubposition sowie eine im ersten Arbeitstakt in eine Position unterhalb der unteren Einschubposition bewegte Aufnahme (23) in die untere Einschubposition, und dass in dem unmittelbar nachfolgenden vierten Arbeitstakt in die in der unteren Einschubposition befindliche Aufnahme (23) eine Produktgruppe eingeschoben wird, während in die in der oberen Einschubposition befindliche Aufnahme (23) keine Produktgruppe eingeschoben wird.

7. Verfahren gemäß Anspruch 6, **dadurch gekennzeichnet, dass** in dem unmittelbar nachfolgenden fünften Arbeitstakt die im dritten Arbeitstakt an die Zwischenposition bewegte Aufnahme (23) in die obere Einschubposition bewegt wird, die im dritten Arbeitstakt in die untere Position bewegte Aufnahme (23) in die Zwischenposition sowie eine im dritten Arbeitstakt in eine Position unterhalb der unteren Einschubposition bewegte Aufnahme (23) in die untere Einschubposition, und dass in die in der oberen Einschubposition befindliche Aufnahme (23) im unmittelbar nachfolgenden sechsten Arbeitstakt eine Produktgruppe eingeschoben wird, während die an der unteren Einschubposition befindliche Aufnahme (23) leer bleibt.

8. Verfahren gemäß einem oder mehreren der vorhergehenden Ansprüche, **dadurch gekennzeichnet, dass** pro Arbeitstakt in jeder Einschubposition eine Aufnahme (23) für eine Produktgruppe bereitgehalten wird, wobei bezogen auf die jeweilige Einschubposition nur jeweils in jedem dritten Arbeitstakt in die dort jeweils bereitgehaltene Aufnahme (23) eine Produktgruppe eingeschoben wird.

9. Verfahren gemäß einem oder mehreren der vorhergehenden Ansprüche, **dadurch gekennzeichnet, dass** der Vertikalförderer (22) über zwei separate, in einer gemeinsamen aufrechten Ebene jeweils umlaufend sowie dabei jeweils abschnittsweise entlang paralleler, aufrechter Bahnabschnitte geführte Gruppen von Schlitten (32) verfügt, wobei jeweils zwei gegenüberliegende Schlitten (32) der beiden Schlittengruppen während einer gleichzeitigen Aufwärtsbewegung entlang der parallelen Bahnabschnitte jeweils derart synchronisiert bewegt werden, dass sie dabei in einer gemeinsamen horizontalen Ebene liegen bzw. miteinander fluchten und zusammen jeweils eine der Aufnahmen (23) des Vertikalförderers (22) bilden.

10. Verfahren gemäß einem oder mehreren der vorhergehenden Ansprüche, **dadurch gekennzeichnet, dass** die Schlitten (32) der einen Schlittengruppe jeweils mit einem Schlitten (32) der anderen Schlittengruppe ein Paar zur Bildung der Aufnahmen (23) bilden, wobei die Schlitten (32) jeweils über eine - insbesondere an einem entlang der Bewegungsbahn geführten Laufwagen beweglich gelagerte - Schlittenplattform (38) verfügen, wobei die Schlittenplattform (38) jedes Schlittens (32) jedes Schlittenpaares jeweils bevor die Schlitten (32) in die unterste Einschubposition bewegt werden relativ zu einem Festteil (37) des jeweiligen Schlittens (32) von einer zurückgezogenen Stellung, in der der jeweilige Schlitten (32) quer zu seiner Bewegungsbahn kürzer ist, in eine ausgefahrene Stellung bewegt wird, in der der Schlitten (32) quer zu seiner Bewegungsbahn länger ist, und in der sich aufeinander zu gerichtete freien Enden der beiden Schlittenplattformen (38) der miteinander fluchtenden Schlitten (32) des Schlittenpaares unmittelbar gegenüberliegen und jeweils in dieser Stellung in einer Aufwärtsbewegung von unten nach oben bewegt werden.

11. Verfahren gemäß Anspruch 10, **dadurch gekennzeichnet, dass** die Schlittenplattformen (38) der Schlitten (32) des Schlittenpaares jeweils von der ausgefahrenen Stellung in die zurückgezogene Stellung bewegt werden, nachdem die jeweilige Packungsgruppe, die sich in der durch die Schlitten (32) gebildeten Aufnahme (23) befunden hat, in der Ausschubposition der Aufnahme (23) aus dieser in Richtung des Behälters (11) ausgefördert wurde, wobei nachfolgend die Schlitten (32) des Schlittenpaares bei einer jeweiligen, ihrer jeweiligen Aufwärtsbewegung nachfolgenden Abwärtsbewegung jeweils mit zurückgezogener Schlittenplattform (38) nach unten bewegt werden.

12. Verfahren gemäß einem oder mehreren der vorhergehenden Ansprüche, **dadurch gekennzeichnet, dass** die Produkte (10) von den übereinander angeordneten Förderbahnen jeweils nacheinander in einzelne Fächer der jeweils zugeordneten, als Fächerförderer ausgebildeten Gruppierförderer eingeschoben werden, nachfolgend gruppenweise von den Gruppierförderern quer zu diesen Förderbahnen weitergefördert werden und nachfolgend jeweils gruppenweise aus den Fächern quer zur Förderrichtung der Gruppierförderer entlang der Zuführbahnen in die in jeweils in zugeordneten Einschubpositionen befindliche Aufnahmen (23) des Vertikalförderers (22) eingeschoben werden.

13. Vorrichtung zum Befüllen von Behältern, insbesondere Kartons, mit Produkten (10), insbesondere Packungen, insbesondere zur Durchführung des Verfahrens gemäß einem oder mehreren der vorhergehenden Ansprüche, mit einem Horizontalförderer (17) zum horizontalen Zuführen der Produkte (10) zu einer Befülleinrichtung (12) der Vorrichtung, in der die Produkte (10) unter Zusammenfassung zu einzelnen Produktgruppen nachfolgend gruppiert und in einen bereitgehaltener Behälter (11) gefüllt werden, **dadurch gekennzeichnet, dass** die Befülleinrichtung (12) ein mehrbahniges Gruppieraggregat (18) aufweist mit mehreren übereinander, insbesondere jeweils in einer horizontalen Ebene angeordneten Gruppierförderern, insbesondere Fächerförderern mit Fächern für jeweils mindestens ein Produkt, mit denen die Produkte (10) jeweils zu Produktgruppen gruppiert werden, dass der Horizontalförderer (17) als ein stromauf des Gruppieraggregats (18) angeordnetes, mehrbahniges Horizontalförderaggregat mit mehreren übereinander angeordneten Einzelförderern ausgebildet ist, die die Produkte (10) jeweils horizontal zu jeweils einem der dem jeweiligen Einzelförderer zugeordneten Gruppierförderer zufördern, und dass die Befülleinrichtung (12) stromab des Gruppieraggregats (18) einen einbahnigen Vertikalförderer (22) aufweist mit mehreren übereinander angeordneten Aufnahmen (23) für jeweils mindestens eine Produktgruppe, dessen Aufnahmen die durch das Gruppieraggregat (18) gruppierten Produktgruppen mehrbahnig entlang von mehreren übereinander angeordneten Zuführbahnen zuführbar sind.

14. Vorrichtung gemäß Anspruch 13, **dadurch gekennzeichnet, dass** der Vertikalförderer (22) zwei separate Teilförderer aufweist mit jeweils in einer gemeinsamen aufrechten Ebene jeweils umlaufend entlang einer insbesondere ovalen Bewegungsbahn und dabei jeweils abschnittsweise entlang paralleler, aufrechter Bewegungsbahnabschnitte geführten Gruppen von Schlitten (32), wobei während einer gleichzeitigen Aufwärtsbewegung sich gegenüberliegende Schlitten (32) der beiden Schlittengruppen der Teilförderer jeweils ein Paar zur Bildung einer der Aufnahmen (23) des Vertikalförderers (22) bilden.

15. Vorrichtung gemäß Anspruch 14, **dadurch gekennzeichnet, dass** jeweils zwei Schlitten (32) entlang der parallelen Bahnabschnitte jeweils derart synchronisiert bewegt werden können, dass sie dabei in einer horizontalen Ebene miteinander fluchten und gemeinsam jeweils eine der Aufnahmen (23) des Vertikalförderers (22) bilden, und/oder dass die Erstreckung der Schlitten (32) quer zu ihrer Bewegungsbahn veränderbar ist, insbesondere durch eine teleskopisch, relativ zu einem Festteil (37) des Schlittens (32) ein- bzw. ausfahrbare, insbesondere verschieblich an dem Festteil (37) gelagerte Schlittenplattform (38), vorzugsweise durch eine solche Schlittenplattenform (38), die an einem entlang der Bewegungsbahn geführten Laufwagen des Schlittens (32) drehbar gelagert ist.

16. Vorrichtung gemäß Anspruch 15, **dadurch gekennzeichnet, dass** der Schlitten (32) und insbesondere die drehbare Lagerung der Schlittenplattform (38) des Laufwagens derart ausgebildet sind, dass sich die Schlittenplattform (38) in einem aufrechten Bahnabschnitt, in dem der Laufwagen bzw. der Schlitten (32) von unten nach oben bewegt wird, in dem ausgefahrenen Zustand befindet und in einem parallelen aufrechten Bahnabschnitt der Bewegungsbahn, in dem der Laufwagen bzw. der Schlitten (32) von oben nach unten bewegt wird, in dem eingefahrenen Zustand, wobei der Übergang zwischen dem ausgefahrenem Zustand und dem eingefahrenem Zustand in einem oberen, gekrümmten, zwischen den beiden aufrechten Bahnabschnitten befindlichen Wendebahnabschnitt der Bewegungsbahn erfolgt und der umgekehrte Übergang in einem unteren, gekrümmten, zwischen den beiden aufrechten Bahnabschnitten befindlichen Wendebahnabschnitt.

17. Vorrichtung gemäß Anspruch 14, 15 oder 16, **dadurch gekennzeichnet, dass** jeder Schlitten (32), insbesondere das Festteil (37), eine seitliche Stützwand aufweist, die zusammen mit einer bzw. der entsprechenden Stützwand des anderen Schlittens (32) des Schlittenpaares aufrechte Seitenwände der durch das Paar gebildeten Aufnahme (23) des Vertikalförderers (22) bilden.

## Claims

1. A method for filling containers, in particular cartons, with products (10), in particular packs, in which the products (10) are successively conveyed horizontally to a filling installation (12) in which the products (10), while being combined so as to form individual product groups, thereafter are grouped, and an offered-up container (11), which is in particular conveyed horizontally to the filling installation (12), is in each case filled in a single track with one or a plurality of product groups, wherein the filled containers (11) subsequently are in particular horizontally transported away, **characterized by** the following measures:
a) the products (10) are conveyed in multiple tracks to the filling installation (12), specifically along a plurality of conveying tracks which are disposed on top of one another;
b) the products (10) conveyed along the conveying tracks to the filling installation (12) are grouped by the filling installation (12) in multiple tracks so as to form product groups, in particular by grouping conveyors of the filling installation (12) that are in each case assigned to the conveying tracks and disposed on top of one another, preferably by compartmentalized conveyors that are disposed on top of one another;
c) the product groups thereafter are successively fed in multiple tracks along infeed tracks that are disposed on top of one another to a common revolving vertical conveyor (22) of the filling installation (12), said vertical conveyor (22) having a plurality of receptacles (23) which for in each case at least one product group of each infeed track are disposed on top of one another;
d) the vertical conveyor (22) conveys in each case the product groups received by said vertical conveyor (22) from further below to further above to an ejection position from which the product groups thereafter are conveyed onward in a single track in the direction of a respective offered-up container (11);
e) the offered-up container (11) is filled with at least one of the product groups.

2. The method as claimed in claim 1, **characterized in that** in a first operating cycle a first set of receptacles (23) of the vertical conveyor (22) is in each case moved simultaneously further upward to insertion positions which are assigned to the infeed tracks and in each case disposed so as to be level with one of the infeed tracks; **in that** each of these receptacles (23) in the respective insertion position thereof is in each case offered up for receiving one product group of the assigned infeed track; **in that** immediately thereafter in the second operating cycle at least one product group of at least one infeed track is inserted into the respective offered-up, assigned receptacle (23); and **in that** in the immediately following third operating cycle a second set of receptacles (23) is in each case moved simultaneously further upward to the insertions positions.

3. The method as claimed in one or a plurality of the preceding claims, **characterized in that** in the case of the filling installation (12) comprising two infeed tracks, specifically a lower and an upper infeed track, the lower infeed track is assigned a lower insertion position which is in each case disposed so as to be level with said lower infeed track, and the upper infeed track is assigned an upper insertion position which is disposed so as to be level with said upper infeed track; **in that** in each case a receptacle (23) is moved successively in a cycled manner into each insertion position; **in that** each of the receptacles (23) situated in the respective insertion position is in each case offered up for receiving a product group of the assigned infeed track; and **in that** it applies to each of these insertion positions that one product group is in each case inserted only into every other of the receptacles (23) successively moved to said insertion position.

4. The method as claimed in one or a plurality of the preceding claims, **characterized in that** in a first operating cycle a first set of receptacles (23) of the vertical conveyor (22) is in each case moved simultaneously further upward to the insertion positions which are assigned to the two infeed tracks, wherein each of these receptacles (23) in the respective insertion position thereof is in each case offered up for receiving one product group of the assigned infeed track; and **in that** one product group is in each case successively inserted in a cycled and alternating manner into a receptacle (23) situated in the one insertion position (23), while no product group is simultaneously inserted into a receptacle (23) situated in the other insertion position.

5. The method as claimed in claim 4, **characterized in that** in the immediately following second operating cycle a product group is inserted into only one of the two receptacles (23) offered up in the respective insertion positions, specifically into the receptacle (23) offered up in the upper insertion position, while the receptacle (23) offered up in the other insertion position, specifically the lower insertion position, remains empty.

6. The method as claimed in claim 5, **characterized in that** in the immediately following third operating cycle the receptacle (23) which in the first operating cycle has been moved to the lower insertion position is moved to an intermediate position situated between the lower and the upper insertion position, a receptacle (23) which in the first operating cycle has been moved to the intermediate position is moved to the upper insertion position, and a receptacle (23) which in the first operating cycle has been moved to a position below the lower insertion position is moved to the lower insertion position; and **in that** in the immediately following fourth operating cycle a product group is inserted into the receptacle (23) situated in the lower insertion position while no product group is inserted into the receptacle (23) situated in the upper insertion position.

7. The method as claimed in claim 6, **characterized in that** in the immediately following fifth operating cycle the receptacle (23) which in the third operating cycle has been moved to the intermediate position is moved to the upper insertion position, the receptacle (23) which in the third operating cycle has been moved to the lower position is moved to the intermediate position, and a receptacle (23) which in the third operating cycle has been moved to a position below the lower insertion position is moved to the lower insertion position; and **in that** in the immediately following sixth operating cycle a product group is inserted into the receptacle (23) situated in the upper insertion position, while the receptacle (23) situated at the lower insertion position remains empty.

8. The method as claimed in one or a plurality of the preceding claims, **characterized in that** in each operating cycle one receptacle (23) for one product group is offered up at each insertion position, wherein in terms of the respective insertion position only one product group is in each case inserted into the respective receptacle (23) offered up there.

9. The method as claimed in one or a plurality of the preceding claims, **characterized in that** the vertical conveyor (22) possesses two separate groups of sliders (32) which are in each case guided in a revolving manner in a common upright plane and herein in each case in portions along parallel upright track portions, wherein two respective opposite sliders (32) of the two slider groups during a simultaneous upward movement are in each case moved along the parallel track portions in a synchronized manner such that said two opposite sliders (32) herein lie in a common horizontal plane, or are mutually aligned, respectively, and conjointly form in each case one of the receptacles (23) of the vertical conveyor (22).

10. The method as claimed in one or a plurality of the preceding claims, **characterized in that** the sliders (32) of the one slider group form in each case with one slider (32) of the other slider group one pair for forming the receptacles (23), wherein the sliders (32) possess in each case one slider platform (38), which is in particular mounted so as to be movable on a carriage that is guided along the movement track, wherein the slider platform (38) of each slider (32) of each pair of sliders, in each case before the sliders (32) are moved to the lowest insertion position, is moved relative to a stationary part (37) of the respective slider (32), from a retracted position in which the respective slider (32) transversely to the movement track thereof is shorter, to a deployed position in which the slider (32) transversely to the movement track thereof is longer, and in which free ends of the two slider platforms (38) of the mutually aligned sliders (32) of the pair of sliders are directed toward one another and directly opposite one another, and in this position are in each case moved in an upward movement from the bottom to the top.

11. The method as claimed in claim 10, **characterized in that** the slider platforms (38) of the sliders (32) of the pair of sliders are in each case moved from the deployed position to the retracted position once the respective group of packs, which has been situated in the receptacle (23) formed by the sliders (32), in the ejection position of the receptacle (23) has been conveyed out of the latter in the direction of the container (11), wherein thereafter the sliders (32) of the pair of sliders in a respective downward movement, following the respective upward movement of said sliders (32), are in each case moved downward with a retracted slider platform (38).

12. The method as claimed in one or a plurality of the preceding claims, **characterized in that** the products (10) are in each case successively inserted by the conveying tracks that are disposed on top of one another into individual compartments of the respective assigned grouping conveyors that are configured as compartmentalized conveyors, thereafter in groups are conveyed by the grouping conveyers onward transversely to these conveying tracks, and thereafter from the compartments inserted in each case in groups, transversely to the conveying direction of the grouping conveyors, along the infeed tracks into the receptacles (23) of the vertical conveyor (22) which are in each case situated at assigned insertion positions.

13. A device for filling containers, in particular cartons, with products (10), in particular packs, in particular for carrying out the method as claimed in one or a plurality of the preceding claims, having a horizontal conveyor (17) for horizontally feeding the products (10) to a filling installation (12) of the device in which the products (10), while being combined so as to form individual product groups, thereafter are grouped and filled into an offered-up container (11), **characterized in that** the filling installation (12) has a multi-track grouping apparatus (18) having a plurality of grouping conveyors which are disposed on top of one another, in particular in each case in a horizontal plane, in particular compartmentalized conveyors having compartments for in each case at least one product, and by way of which the products (10) are in each case grouped so as to form product groups; **in that** the horizontal conveyor (17) is configured as a multi-track horizontal conveyor apparatus which is disposed upstream of the grouping apparatus (18) and has a plurality of individual conveyors which are disposed on top of one another and which feed the products (10) in each case horizontally to in each case one of the grouping conveyors assigned to the respective individual conveyor; and **in that** the filling installation (12) downstream of the grouping apparatus (18) has a single-track vertical conveyor (22) which has a plurality of receptacles (23) which, for in each case at least one product group, are disposed on top of one another, the product groups that have been grouped by the grouping apparatus (18) being able to be fed in multiple tracks along a plurality of infeed tracks which are disposed on top of one another to the receptacles of said vertical conveyor (22) .

14. The device as claimed in claim 13, **characterized in that** the vertical conveyor (22) has two separate sub-conveyors having in each case groups of sliders (32) which are in each case guided in a revolving manner along an in particular oval movement track in a common upright plane and herein in each case in portions along parallel upright movement track portions, wherein during a simultaneous upward movement opposite sliders (32) of the two slider groups of the sub-conveyors form in each case one pair for forming one of the receptacles (23) of the vertical conveyor (22).

15. The device as claimed in claim 14, **characterized in that** respectively two sliders (32) can in each case be moved in a synchronized manner along the parallel track portions such that said two sliders (32) herein are mutually aligned in a horizontal plane and conjointly form in each case one of the receptacles (23) of the vertical conveyor (22), and/or that the extent of the sliders (32) transversely to the movement track thereof is variable, in particular by a slider platform (38) which is able to be retracted or deployed, respectively, in a telescopic manner relative to a stationary part (37) of the slider (32), and is in particular mounted so as to be displaceable on the stationary part (37), preferably by such a slider platform (38) that is mounted so as to be rotatable on a carriage of the slider (32) that is guided along the movement track.

16. The device as claimed in claim 15, **characterized in that** the slider (32), and in particular the rotatable mounting of the slider platform (38) of the carriage, are configured in such a manner that the slider platform (38), in an upright track portion in which the carriage or the slider (32), respectively, is moved from the bottom to the top, is in the deployed state and, in a parallel upright track portion of the movement track in which the carriage or the slider (32), respectively, is moved from the top to the bottom, is in the retracted state, wherein the transition between the deployed state and the retracted state takes place in an upper curved reversing track portion of the movement track that is situated between the two upright track portions, and the transition counter thereto takes place in a lower curved reversing track portion that is situated between the two upright track portions.

17. The device as claimed in claims 14, 15 or 16, **characterized in that** each slider (32), in particular the stationary part (37), has a lateral support wall which, conjointly with a, or the corresponding, respectively, support wall of the other slider (32) of the slider pair form upright lateral walls of the receptacle (23) of the vertical conveyor (22) that are formed by the pair.

## Revendications

1. Procédé de remplissage de récipients, en particulier de cartons, avec des produits (10), en particulier des emballages, dans lequel les produits (10) sont amenés l'un après l'autre horizontalement à un dispositif de remplissage (12), les produits (10) étant ensuite regroupés en différents groupes de produits et un récipient (11) tenu prêt étant à chaque fois rempli, qui est amené au dispositif de remplissage (12), en particulier horizontalement, est rempli sur une voie avec un ou plusieurs groupes de produits, les récipients (11) remplis étant ensuite évacués, en particulier horizontalement, **caractérisé par** les mesures suivantes :
a) les produits (10) sont acheminés vers le dispositif de remplissage (12) sur plusieurs voies, à savoir selon plusieurs voies de transport disposées les unes au-dessus des autres,
b) les produits (10) acheminés vers le dispositif de remplissage (12) le long des voies de transport sont regroupés en groupes de produits par le dispositif de remplissage (12) sur plusieurs voies, en particulier par des convoyeurs de regroupement du dispositif de remplissage (12) associés respectivement aux voies de transport et disposés les uns au-dessus des autres, de préférence par des convoyeurs à compartiments disposés les uns au-dessus des autres,
c) les groupes de produits sont ensuite amenés sur plusieurs voies, les uns après les autres, le long de voies d'amenée disposées les unes au-dessus des autres, à un transporteur vertical (22) commun circulant du dispositif de remplissage (12) avec plusieurs réceptacles (23) disposés les uns au-dessus des autres pour au moins un groupe de produits de chaque voie d'amenée,
d) le transporteur vertical (22) transporte les groupes de produits qu'il reçoit de bas en haut jusqu'à une position d'extraction, à partir de laquelle les groupes de produits sont ensuite transportés sur une voie en direction d'un récipient (11) respectif tenu prêt,
e) le récipient (11) tenu prêt est rempli d'au moins un des groupes de produits.

2. Procédé selon la revendication 1, **caractérisé en ce que**, dans un premier cycle de travail, un premier ensemble de réceptacles (23) du convoyeur vertical (22) est déplacé simultanément vers le haut dans des positions d'insertion associées aux voies d'alimentation et disposées à la hauteur de l'une des voies d'alimentation, **en ce que** chacun de ces réceptacles (23) est tenu prêt dans sa position d'insertion respective pour recevoir un groupe de produits provenant de la voie d'alimentation associée, **en ce que**, immédiatement au cours du deuxième cycle de travail qui suit, au moins un groupe de produits d'au moins une voie d'alimentation est inséré dans le réceptacle (23) associé tenu prêt, et **en ce que**, au cours du troisième cycle de travail suivant, un deuxième jeu de réceptacles (23) est déplacé simultanément vers le haut dans les positions d'insertion.

3. Procédé selon une ou plusieurs des revendications précédentes, **caractérisé en ce que**, dans le cas où le dispositif de remplissage (12) comprend deux voies d'alimentation, à savoir une voie d'alimentation inférieure et une voie d'alimentation supérieure, une position d'insertion inférieure étant associée à la voie d'alimentation inférieure, en étant disposée à sa hauteur, et une position d'insertion supérieure étant associée à la voie d'alimentation supérieure, en étant disposée à sa hauteur, **en ce qu'**un réceptacle (23) est déplacé successivement de manière cadencée dans chaque position d'insertion, **en ce que** chacun des réceptacles (23) se trouvant dans la position d'insertion respective est tenu prêt à recevoir un groupe de produits provenant de la voie d'alimentation associée, et **en ce que**, pour chacune de ces positions d'insertion, un groupe de produits n'est inséré que dans un réceptacle sur deux des réceptacles (23) qui y sont déplacés successivement.

4. Procédé selon une ou plusieurs des revendications précédentes, **caractérisé en ce que**, dans un premier cycle de travail, un premier ensemble de réceptacles (23) du convoyeur vertical (22) est déplacé simultanément vers le haut dans les positions d'insertion associées aux deux voies d'alimentation, chacun de ces réceptacles (23) étant tenu prêt, dans sa position d'insertion respective, à recevoir respectivement un groupe de produits provenant de la voie d'amenée associée, et **en ce que**, successivement et en alternance, un groupe de produits est respectivement inséré dans un réceptacle (23) se trouvant dans l'une des positions d'insertion, tandis que, simultanément, aucun groupe de produits n'est inséré dans un réceptacle (23) se trouvant dans l'autre position d'insertion.

5. Procédé selon la revendication 4, **caractérisé en ce que**, dans le deuxième cycle de travail qui suit immédiatement, un groupe de produits n'est introduit que dans l'un des deux réceptacles (23) maintenus prêts dans les positions d'introduction respectives, à savoir dans le réceptacle (23) tenu prêt dans la position d'introduction supérieure, tandis que le réceptacle (23) tenu prêt dans l'autre position d'introduction, à savoir la position d'introduction inférieure, reste vide.

6. Procédé selon la revendication 5, **caractérisé en ce que**, dans le troisième cycle de travail qui suit immédiatement, le réceptacle (23) déplacé au cours du premier cycle de travail à la position d'insertion inférieure est déplacé dans une position intermédiaire se trouvant entre la position d'insertion inférieure et la position d'insertion supérieure, un réceptacle (23) déplacé au cours du premier cycle de travail à la position intermédiaire, est déplacé dans la position d'insertion supérieure, ainsi qu'un réceptacle (23) déplacé au cours du premier cycle de travail à une position en dessous de la position d'insertion inférieure, est déplacé dans la position d'insertion inférieure, et **en ce que** dans le quatrième cycle de travail qui suit immédiatement, un groupe de produits est inséré dans le réceptacle (23) se trouvant dans la position d'insertion inférieure, tandis qu'aucun groupe de produits n'est inséré dans le réceptacle (23) se trouvant dans la position d'insertion supérieure.

7. Procédé selon la revendication 6, **caractérisé en ce que**, au cours du cinquième cycle de travail qui suit immédiatement, le réceptacle (23) déplacé à la position intermédiaire au cours du troisième cycle de travail est déplacé à la position d'insertion supérieure, le réceptacle (23) déplacé à la position inférieure au cours du troisième cycle de travail est déplacé dans la position intermédiaire ainsi qu'un réceptacle (23) déplacé vers une position inférieure dans la position d'insertion inférieure au cours du troisième cycle de travail est déplacé à la position d'insertion inférieure, et **en ce qu'**un groupe de produits est inséré dans le réceptacle (23) se trouvant dans la position d'insertion supérieure au cours du sixième cycle de travail qui suit immédiatement, tandis que le réceptacle (23) se trouvant dans la position d'insertion inférieure reste vide.

8. Procédé selon une ou plusieurs des revendications précédentes, **caractérisé en ce qu'**un réceptacle (23) pour un groupe de produits est maintenu prêt pour chaque cycle de travail dans chaque position d'insertion, un groupe de produits n'étant inséré dans le réceptacle (23) tenu à disposition à cette position d'insertion qu'un cycle de travail sur trois par rapport à la position d'insertion respective.

9. Procédé selon une ou plusieurs des revendications précédentes, **caractérisé en ce que** le convoyeur vertical (22) dispose de deux groupes de coulisseaux (32) séparés, guidés dans un plan vertical commun, chacun circulant par sections le long de parties de voie verticales parallèles, deux coulisseaux (32) opposés des deux groupes de coulisseaux étant déplacés de manière synchronisée pendant un mouvement ascendant simultané le long des parties de voie parallèles, de telle sorte qu'ils se trouvent dans un plan horizontal commun ou qu'ils sont alignés l'un avec l'autre et forment ensemble respectivement l'un des réceptacles (23) du convoyeur vertical (22).

10. Procédé selon une ou plusieurs des revendications précédentes, **caractérisé en ce que** les coulisseaux (32) d'un groupe de coulisseaux forment chacun une paire avec un coulisseau (32) de l'autre groupe de coulisseaux pour former les réceptacles (23), les coulisseaux (32) comportant chacun une plate-forme (38) de coulisseau - en particulier montée de manière mobile sur un coulisseau guidé le long de la voie de déplacement -, la plate-forme (38) de coulisseau de chaque coulisseau (32) de chaque paire de coulisseaux étant déplacée, avant que les coulisseaux (32) ne soient déplacés, dans la position d'insertion la plus basse par rapport à une partie fixe (37) du coulisseau respectif (32), depuis une position rétractée dans laquelle le coulisseau respectif (32) est plus court transversalement à sa trajectoire de déplacement, jusque dans une position sortie dans laquelle le coulisseau (32) est plus long transversalement à sa trajectoire de déplacement, et dans laquelle les extrémités libres dirigées l'une vers l'autre des deux plates-formes (38) de coulisseaux des coulisseaux (32) alignés l'un avec l'autre de la paire de coulisseaux se font directement face et sont déplacées chacune dans cette position dans un mouvement ascendant de bas en haut.

11. Procédé selon la revendication 10, **caractérisé en ce que** les plates-formes (38) de coulisseaux des coulisseaux (32) de la paire de coulisseaux sont déplacées chacune de la position sortie à la position rétractée après que le groupe d'emballages respectif, qui se trouvait dans le réceptacle (23) formé par les coulisseaux (32), dans la position d'extraction du réceptacle (23), a été transporté hors de celui-ci en direction du récipient (11), les coulisseaux (32) de la paire de coulisseaux étant ensuite déplacés vers le bas lors d'un mouvement descendant respectif suivant leur mouvement ascendant respectif, la plate-forme (38) de coulisseau étant rétractée.

12. Le procédé selon une ou plusieurs des revendications précédentes, **caractérisé en ce que** les produits (10) sont introduits l'un après l'autre depuis les voies de transport disposées l'une au-dessus de l'autre dans des compartiments individuels des convoyeurs de regroupement respectivement associés, conçus comme des convoyeurs à compartiments, sont ensuite transportés par groupes par les convoyeurs de regroupement transversalement à ces voies de transport et sont ensuite introduits par groupes à partir des compartiments transversalement à la direction de transport des convoyeurs de regroupement le long des voies d'amenée dans les réceptacles (23) du convoyeur vertical (22) se trouvant dans des positions d'insertion respectives associées.

13. Dispositif de remplissage de récipients, notamment de cartons, avec des produits (10), notamment des emballages, notamment pour la mise en œuvre du procédé selon une ou plusieurs des revendications précédentes, comportant un convoyeur horizontal (17) d'amenée horizontale des produits (10) vers un dispositif de remplissage (12) du dispositif, dans lequel les produits (10) sont ensuite regroupés en différents groupes de produits et remplis dans un récipient (11) tenu prêt, **caractérisé en ce que** le dispositif de remplissage (12) présente un groupe de regroupement (18) à plusieurs voies avec plusieurs convoyeurs de regroupement disposés les uns au-dessus des autres, en particulier respectivement dans un plan horizontal, en particulier des convoyeurs à compartiments avec des compartiments pour respectivement au moins un produit, avec lesquels les produits (10) sont respectivement regroupés en groupes de produits, **en ce que** le convoyeur horizontal (17) est réalisé sous la forme d'un groupe de convoyeurs horizontaux à plusieurs voies, disposé en amont du groupe de regroupement (18), avec plusieurs convoyeurs individuels disposés les uns au-dessus des autres, qui acheminent les produits (10) respectivement horizontalement vers respectivement l'un des convoyeurs de regroupement associés au convoyeur individuel respectif, et **en ce que** le dispositif de remplissage (12) présente, en aval du groupe de regroupement (18), un convoyeur vertical (22) à une voie avec plusieurs réceptacles (23) disposés les uns au-dessus des autres pour respectivement au moins un groupe de produits, dans lequel les groupes de produits regroupés par le groupe de regroupement (18) sont aptes à être amenés sur plusieurs voies le long de plusieurs voies d'amenée disposées les unes au-dessus des autres.

14. Dispositif selon la revendication 13, **caractérisé en ce que** le convoyeur vertical (22) présente deux sous-convoyeurs séparés ayant des groupes de coulisseaux (32) guidés chacun dans un plan vertical commun respectivement en circulation le long d'une trajectoire de déplacement en particulier ovale et ainsi respectivement par sections le long de sections de trajectoire de déplacement parallèles et verticales, des coulisseaux (32) opposés des deux groupes de coulisseaux des sous-convoyeurs formant respectivement une paire pour former l'un des réceptacles (23) du convoyeur vertical (22) pendant un mouvement ascendant simultané.

15. Dispositif selon la revendication 14, **caractérisé en ce que** deux coulisseaux (32) sont aptes à être déplacés de manière synchronisée le long des sections de voie parallèles de telle sorte qu'ils soient alignés l'un avec l'autre dans un plan horizontal et forment ensemble l'un des réceptacles (23) du convoyeur vertical (22), et/ou **en ce que** l'extension des coulisseaux (32) est apte à être modifiée transversalement à leur trajectoire de déplacement, en particulier au moyen d'une plate-forme (38) de coulisseau extensible ou rétractable télescopiquement par rapport à une partie fixe (37) du chariot (32) et notamment montée coulissante sur la partie fixe (37), de préférence par une telle plate-forme (38) de coulisseau montée rotative sur un chariot du coulisseau (32) guidé le long de la trajectoire de déplacement.

16. Dispositif selon la revendication 15, **caractérisé en ce que** le coulisseau (32), et en particulier le montage rotatif de la plate-forme (38) de coulisseau du chariot sont conçus de telle sorte que la plate-forme (38) de coulisseau se trouve à l'état déployé dans une section de voie verticale dans laquelle le chariot ou le coulisseau (32) est déplacé de bas en haut et à l'état rétracté dans une section de voie verticale parallèle de la voie de déplacement dans laquelle le chariot ou le coulisseau (32) est déplacé de haut en bas, la transition entre l'état déployé et l'état rétracté s'effectuant dans une section supérieure de voie, de virage courbe, située entre les deux sections de voie verticales de la voie de déplacement et la transition inverse s'effectuant dans une section inférieure de voie, de virage courbe, située entre les deux sections de voie verticales.

17. Dispositif selon la revendication 14, 15 ou 16, **caractérisé en ce que** chaque coulisseau (32), notamment la partie fixe (37), comporte une paroi latérale d'appui qui forme, avec une ou la paroi d'appui correspondante de l'autre coulisseau (32) de la paire de coulisseaux, des parois latérales verticales du réceptacle (23) du convoyeur vertical (22) formé par la paire.
